# EUROPÄISCHE PATENTSCHRIFT

(11) **EP 3 697 649 B1**
(45) Veröffentlichungstag und Bekanntmachung des Hinweises auf die Patenterteilung: **12.07.2023**
(21) Anmeldenummer: 18785909.5
(22) Anmeldetag: 08.10.2018
(51) Int. Cl.: B60R 21/231, B60R 21/237, B60R 21/214, B60R 21/2338

(54) **FAHRZEUGINSASSEN-RÜCKHALTESYSTEM MIT EINEM GASSACKMODUL**
VEHICLE PASSENGER RESTRAINT SYSTEM COMPRISING AN AIRBAG MODULE
SYSTÈME DE RETENUE D'OCCUPANT DE VÉHICULE MUNI D'UN MODULE AIRBAG

(30) Priorität: 20.10.2017 DE 102017124577
(43) Veröffentlichungstag der Anmeldung: 26.08.2020
(73) Patentinhaber: Dalphi Metal España, S.A., 36213 Vigo (ES)
(72) Erfinder: NAVARRO ARRANZ, Antonio, 47008 Valladolid (ES); RAMOS AGUSTÍN, Ramón, 47150 Viana de Cega (Valladolid) (ES)
(74) Vertreter: ZF Patentabteilung - DIPS
(86) Internationale Anmeldenummer: PCT/EP2018/077331
(87) Internationale Veröffentlichungsnummer: WO 2019/076669

(56) Entgegenhaltungen:
- WO-A1-2015/169437
- DE-A1-102009 050 384
- DE-A1-102014 006 576
- US-A- 5 730 463
- US-A1- 2002 024 200
- US-A1- 2004 251 668
- US-A1- 2005 070 414
- US-A1- 2005 070 414
- US-A1- 2013 099 466
- US-A1- 2013 113 190
- US-A1- 2014 159 353

## Beschreibung

Die Erfindung betrifft ein Fahrzeuginsassen-Rückhaltesystem mit einem Gassackmodul nach Anspruch 1.

Zum Schutz der Fahrzeuginsassen werden mit großem Erfolg Gassäcke eingesetzt. Die beste Schutzwirkung entfalten diese, wenn sich der aufzufangende Fahrzeuginsasse in einer bestimmten Position relativ zum aufgeblasenen Gassack befindet. Bei großvolumigen und komplex geformten Gassäcken muss dafür Sorge getragen werden, dass sie sich präzise und reproduzierbar im Fahrzeuginnenraum entfalten. Aus den Dokumenten DE102014006576 A1, US2002/024200 A1, WO2015/169437 A1, US2005/070414 A1 und US2005/070414 A1 sind jeweils Fahrzeuginsassen-Rückhaltesysteme mit einem Gassackmodul unter einer Dachhimmelverkleidung bekannt.

Aufgabe der Erfindung ist es daher, das Entfaltungsverhalten eines solchen Gassacks zu verbessern.

Diese Aufgabe wird mit einem Fahrzeuginsassen-Rückhaltesystem mit den Merkmalen des Anspruchs 1 gelöst. Das Fahrzeuginsassen-Rückhaltesystem hat ein Gassackmodul, das einen Gassack sowie einen Gasgenerator aufweist, der bei einer Aktivierung Füllgas für den Gassack liefert, wobei der Gassack vor der Aktivierung zu einem Gassackpaket so zusammenlegt ist, dass ein Hauptpaket gebildet ist, das einen Rückhalteteil des Gassacks enthält, der einen Großteil des Gassackvolumens bildet, sowie ein Verbindungsabschnitt, der einen Hals des Gassacks umfasst, der den Rückhalteteil mit dem Gasgenerator verbindet, wobei der Rückhalteteil anders als der Verbindungsabschnitt gefaltet ist. Diese Aufteilung verschiedener Abschnitte des Gassacks in verschiedene Paketabschnitte erlaubt es, bei der Aktivierung des Gasgenerators zunächst den Hals zu befüllen, der dann das Hauptpaket noch zumindest teilweise gefaltet in den Fahrzeuginnenraum schiebt. Somit kann das Hauptpaket bereits in den Fahrzeuginnenraum bewegt werden, bevor es sich vollständig entfaltet hat, und der Gassack kommt nicht in unerwünschten Kontakt mit Verkleidungsteilen oder anderen Bauteilen im Fahrzeuginnenraum.

Der Hals ist vorteilhaft zu einer bis drei Zickzackfalten gefaltet, sodass sich der Hals linear streckt, wenn Gas vom Gasgenerator in den Verbindungsabschnitt einströmt.

Im entfalteten und aufgeblasenen Gassack ist der Hals in Fahrzeugquerrichtung gesehen vorzugsweise schmaler als der Rückhalteteil. Es ist ausreichend, wenn der Hals nur wenig breiter als der Gasgenerator ist und deutlich kürzer in Fahrzeuglängsrichtung gesehen als der Rückhalteteil des Gassacks. Der Hals trägt normalerweise nicht zur Rückhaltewirkung des Gassacks bei, sodass hier Material, Bauraum und Füllvolumen eingespart werden können.

Das Hauptpaket kann breiter sein als die Länge des Gasgenerators, sodass das Gassackmodul in einer Gassackmodullängsrichtung, die sich vom Gasgenerator zum Gassackpaket erstreckt, kürzer als breit ist.

Um eine lineare Schubwirkung zu erreichen, der gefaltete Verbindungsabschnitt zwischen dem Gasgenerator und dem Hauptpaket angeordnet. Gasgenerator, Verbindungsabschnitt und Hauptpaket liegen dabei vorteilhaft entlang einer Geraden entlang der Modullängsrichtung.

Der Verbindungsabschnitt und das Hauptpaket lassen sich so zusammenlegen und so im Gassackpaket anordnen, dass sich das Hauptpaket erst entfaltet, wenn es vollständig im Fahrzeuginnenraum liegt.

Der gestreckte Verbindungsabschnitt, also der Hals, hat eine Länge von etwa 5 cm bis 50 cm, insbesondere von 15 cm bis 50 cm haben.

Die Länge des Halses sollte ausreichend gewählt sein, um das Hauptpaket des Gassackpakets vorzugsweise vollständig in den Fahrzeuginnenraum schieben zu können. In einer zweiten Funktion kann der Hals dafür sorgen, dass der Rückhalteteil des Gassacks an der für ihn vorgesehenen Stelle im Fahrzeuginnenraum platziert ist, wenn er vollständig aufgeblasen ist. Aus diesen beiden Parametern leitet sich für den Fachmann die optimale Länge des Halses ab.

Um die Entfaltung des Gassacks im Fahrzeuginnenraum zusätzlich zu beeinflussen, weist der Gassack ein erstes freies Ende auf, das den Rückhalteteil begrenzt, wobei das erste freie Ende vor der Aktivierung des Gasgenerators über ein Fangband im Bereich des Gasgenerators fixiert ist, das eine Schwächungszone aufweist, und das Fangband zumindest so lange intakt ist, bis der Hals vollständig mit Gas gefüllt ist. Auf diese Weise lässt sich noch Einfluss auf das Entfaltungsverhalten nehmen, wenn sich das Hauptpaket bereits im Fahrzeuginnenraum befindet. Ab einer bestimmten Zugkraft löst sich das Fangband, beispielsweise, indem es sich an der Schwächungszone teilt, und der Gassack kann seine endgültige aufgeblasene Form annehmen.

Der Rückhalteteil des Gassacks im Hauptpaket kann sowohl gefaltet als auch gerollt sein, sodass auch bei einer komplexen Gassackform eine gezielte Steuerung der Entfaltung möglich ist.

In einer bevorzugten Ausführungsform ist der Gassack ein Beifahrergassack.

Der Gassack entfaltet sich dann aus der Dachhimmelverkleidung heraus und liegt im aufgeblasenen Zustand im Raum zwischen einer Windschutzscheibe und dem Fahrzeuginsassen, wobei sich der Gassack auch über eine Armaturentafel erstreckt und das erste Ende ein unteres Ende einer Prallfläche für den Fahrzeuginsassen bilden kann.

In einer möglichen Konfiguration der Erfindung umfasst das Fahrzeuginsassen-Rückhaltesystem ein Gassackmodul, das im Bereich des Dachhimmels des Fahrzeugs auf der Beifahrerseite in Fahrzeugquerrichtung gesehen etwa mittig bezüglich des Beifahrersitzes montiert ist und einen zu einem Gassackpaket zusammengelegten Gassack aufweist, der sich im Rückhaltefall zwischen der Windschutzscheibe und dem Beifahrer entfaltet, um den Beifahrer frontal aufzufangen. Das Gassackpaket ist z. B. zwischen der Drehachse der Sonnenblende und der Windschutzscheibe des Fahrzeugs angeordnet.

In einer anderen nicht zur Erfindung gehörenden Ausführungsform ist der Gassack ein Kniegassack, der im unteren Bereich einer Armaturentafel oder unterhalb dieser angeordnet ist. In diesem Fall entfaltet sich der Gassack entlang der Armaturentafel bzw. der Lenksäulenverkleidung in Richtung zum Fahrgastinnenraum.

Generell ist der Gasgenerator vorzugsweise so im Gassackmodul angeordnet, dass seine Längsachse senkrecht zur Modullängsrichtung des Gassackmoduls steht, wobei die Modullängsrichtung im eingebauten Zustand des Gassackmoduls mit einer Entfaltungsrichtung des Gassacks aus dem Gassackmodul zusammenfällt und ungefähr in Fahrzeuglängsrichtung zeigt.

Der Gasgenerator ist direkt in das Einblasende des Gassacks eingesetzt und fest mit dem Gassack verbunden, indem zwei gegenüberliegende Lappen des Gassacks mit darin ausgebildeten Befestigungsöffnungen über vom Gasgenerator abstehende Befestigungsbolzen gezogen sind und so die Einblasöffnung gasdicht verschließen.

Zur Befestigung des Gassackmoduls am Dachrahmen, falls das Gassackmodul ein Beifahrer-Frontmodul ist, ist der Gasgenerator in einer im Querschnitt C-förmigen Aufnahme eines am Dachrahmen befestigten Modulträgers aufgenommen, wobei jedoch der fahrzeuginnenraumseitige Arm der C-förmigen Aufnahme nicht wesentlich über den Gasgenerator übersteht.

Das Hauptpaket ist z. B. so zusammengelegt, dass das erste freie Ende zum Einblasende zurückgefaltet ist. Außerdem sind die beiden seitlichen Abschnitte des Rückhalteteils zur Mitte zurückgefaltet und anschließend aufgerollt. So wird erreicht, dass zuerst ein äußerer Schenkel des Gassacks, der sich vom Einblasende bis zu einem zweiten freien Ende des Gassacks erstreckt, das im aufgeblasenen Zustand in etwa im Übergang von der Windschutzscheibe zur Armaturentafel liegt, gefüllt wird. Dagegen strömt das Füllgas zunächst im Wesentlichen noch nicht in einen inneren Schenkel des Gassacks ein, der sich vom Einblasende zum ersten freien Ende des Gassacks erstreckt. Dies wird durch die Faltung des Rückhalteteils des Gassacks und das Fangband erreicht.

Ab einem gewissen Füllstand, der nach einem vorgegebenen ersten Zeitraum nach der Aktivierung des Gasgenerators erreicht ist, löst sich das Fangband aufgrund der wirkenden Zugkräfte, und auch der innere Schenkel des Gassacks und das erste freie Ende des Gassacks werden vollständig aufgeblasen.

Im vollständig aufgeblasenen Zustand des Gassacks erstreckt sich das erste freie Ende über die Armaturentafel hinaus in Richtung zum Fahrzeuginsassen, und zwischen dem ersten freien Ende und dem gasgeneratorseitigen Einblasende des Gassacks ist auf der zum Fahrzeuginsassen gerichteten Seite eine Prallfläche gebildet.

Der Gassack setzt sich vorzugsweise im Wesentlichen aus drei Außenwandabschnitten zusammen, von denen ein erster Außenwandabschnitt sich vom Einblasende zum zweiten freien Ende erstreckt und eine Abstützfläche zur Abstützung an der Windschutzscheibe bildet. Der zweite Außenwandabschnitt verbindet das erste freie Ende und das zweite freie Ende und liegt im aufgeblasenen Zustand auf und über der Armaturentafel, und der dritte Außenwandabschnitt verbindet das erste freie Ende mit dem Einblasende und bildet im aufgeblasenen Zustand die Prallfläche.

Das zusammengelegte Gassackpaket ist zusammen mit dem Gasgenerator in einer Umhüllung aufgenommen, die gasgeneratorseitig über zwei Haltelappen an den Befestigungsbolzen des Gasgenerators befestigt ist, während das Hauptpaket des zusammengelegten Gassackpakets in eine Aufnahmetasche gesteckt ist und dort über eine an der Umhüllung ausgebildete Gassackpaketfixierung gehalten wird. Die Gassackpaketfixierung weist ineinandergreifende erste und zweite Fixierelemente auf, die eine Steckverbindung bilden und die beide ausschließlich aus dem Material der Umhüllung, insbesondere einem Gassackgewebe, geformt sind. Der Verbindungsabschnitt liegt außerhalb der Aufnahmetasche und wird durch die Haltelappen im gefalteten Zustand fixiert. Zur Fixierung am Fahrzeug weist die Umhüllung einen oder mehrere Fixierabschnitte auf, über die auch eine Vorfixierung an der Fahrzeugkarosserie möglich ist, die eine genaue Positionierung des Gassackmoduls und ein bequemes Anbringen der lasttragenden Fixierungen erlaubt.

Im Boden der Aufnahmetasche der Umhüllung ist beispielsweise eine Schwächungszone vorgesehen, durch die das Hauptpaket des zusammengelegten Gassackpakets aus dem Gassackmodul austreten kann und sich aus der Dachhimmelverkleidung heraus in den Fahrzeuginnenraum entfalten kann.

Sämtliche Merkmale, die hier im Zusammenhang mit der Erfindung beschrieben sind, lassen sich auch einzeln unabhängig voneinander oder in beliebigen geeigneten, im Ermessen des Fachmanns liegenden Kombinationen umsetzen.

Die Erfindung wird nachfolgend anhand eines Ausführungsbeispiels mit Bezug auf die beigefügten Figuren näher beschrieben. In den Figuren zeigen:
- Figur 1 eine schematische perspektivische Ansicht eines erfindungsgemäßen Fahrzeuginsassen-Rückhaltesystems, mit einem an einem Dach des Fahrzeugs montierten Gassackmodul;
- Figur 2 einen am Fahrzeugdach montierten Modulträger des Gassackmoduls aus Figur 1;
- Figur 3 eine Draufsicht auf das Gassackmodul aus Figur 1,
- Figur 4 die Darstellung aus Figur 3, bei der zusätzlich die Sonnenblende gezeigt ist;
- Figur 5 eine schematische Schnittansicht des im Fahrzeug eingebauten Fahrzeuginsassen-Rückhaltesystems aus Figur 1;
- Figur 6 eine schematische Explosionsdarstellung des Gassackmoduls aus Figur 1;
- Figur 7 eine schematische Draufsicht auf das am Dach montierte Gassackmodul aus Figur 1;
- Figuren 8 und 9 das Fahrzeuginsassen-Rückhaltesystem aus Figur 1 in einer schematischen Schnittansicht vor der Entfaltung des Gassacks und während der anfänglichen Entfaltungsphase des Gassacks;
- Figuren 10 bis 17 den Aufblasvorgang des Gassacks des Gassackmoduls aus Figur 1 vom Zustand vor der Aktivierung des Fahrzeuginsassen-Rückhaltesystems bis hin zum vollständig aufgeblasenen Gassack in einer schematischen Schnittansicht;
- Figur 18 eine schematische Schnittansicht des Gassacks des Fahrzeuginsassen-Rückhaltesystems aus Figur 1 mit eingesetztem Gasgenerator;
- Figur 19 den im nicht aufgeblasenen Zustand flach ausgebreiteten Gassack des Fahrzeuginsassen-Rückhaltesystems aus Figur 1 in einer Draufsicht auf einen dritten Außenwandabschnitt des Gassacks;
- Figuren 20 bis 23 eine schematische Darstellung des Einsetzens eines Gasgenerators in ein Einblasende des Gassacks des Fahrzeuginsassen-Rückhaltesystems aus Figur 1;
- Figuren 24 bis 27 Schritte des Zusammenlegens des Gassacks des Fahrzeuginsassen-Rückhaltesystems aus Figur 1, betrachtet in einer Draufsicht;
- Figur 28 eine schematische Darstellung des zusammengelegten Gassackpakets des Fahrzeuginsassen-Rückhaltesystems aus Figur 1;
- Figur 29 eine schematische perspektivische Darstellung des in eine Umhüllung eingesetzten Gassackpakets aus Figur 28;
- Figur 30 eine schematische Draufsicht auf die Umhüllung aus Figur 29;
- Figur 31 eine schematische perspektivische Darstellung der Umhüllung;
- Figuren 32 bis 34 das Einsetzen des Gassackpakets in die Umhüllung;
- Figur 35 Details der Gassackpaketfixierung der Umhüllung;
- Figur 36 das Gassackpaket in einer schematischen Schnittansicht, eingesetzt in eine Faltvorrichtung;
- Figuren 37 und 38 das Schließen einer Gasgenerator-Fixierung der Umhüllung;
- Figur 39 eine schematische Übersicht über ein alternatives Verfahren zum Einsetzen des Gassackpakets in die Umhüllung; und
- Figuren 40 bis 44 Schritte des alternativen Verfahrens zum Einsetzen des Gassackpakets in die Umhüllung in schematischer Darstellung.

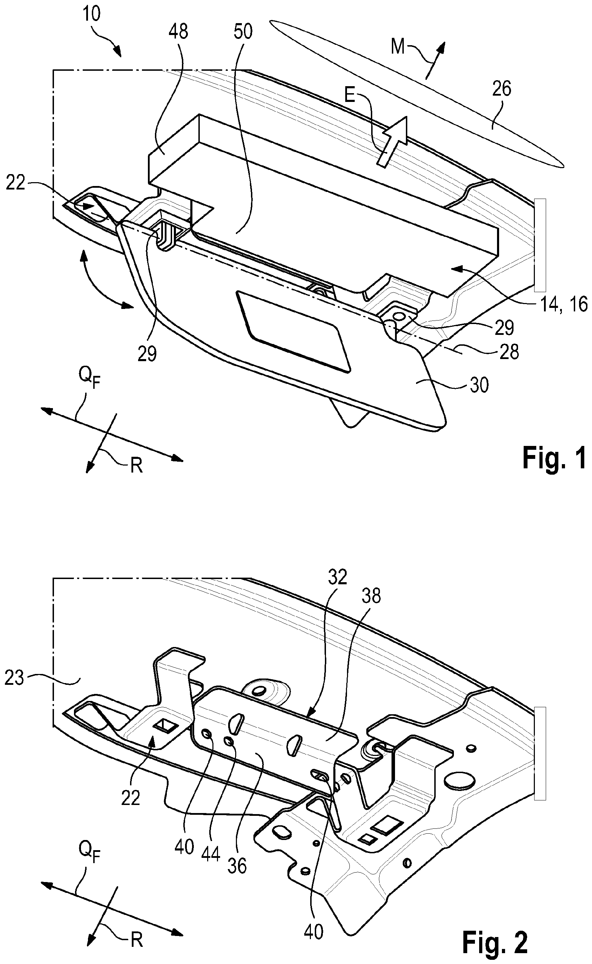

Die Figuren 1 bis 7 zeigen den Aufbau eines Fahrzeuginsassen-Rückhaltesystems 10, das in diesem Beispiel dafür ausgelegt ist, einen Beifahrer insbesondere eines Personenkraftwagens bei einem Frontalaufprall, zu schützen.

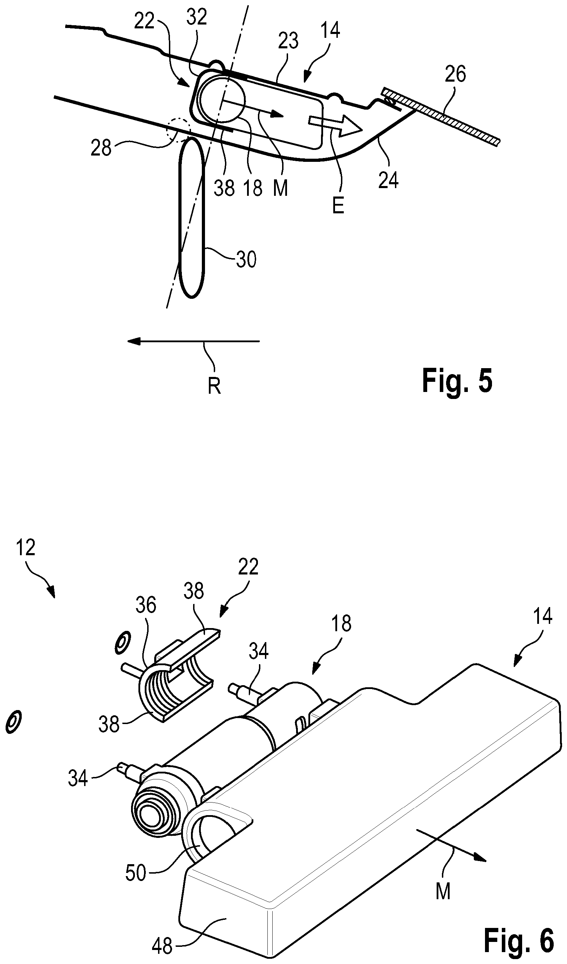

Das Fahrzeuginsassen-Rückhaltesystem 10 umfasst ein Gassackmodul 12 (siehe insbesondere Figuren 5 bis 7), das einen zu einem Gassackpaket 14 zusammengelegten frontal wirkenden Gassack 16 sowie einen Gasgenerator 18 umfasst, der Füllgas zum Aufblasen des Gassacks 16 liefert. Der Gasgenerator 18 ist in den Gassack 16 eingesetzt und somit in das Gassackpaket 14 integriert.

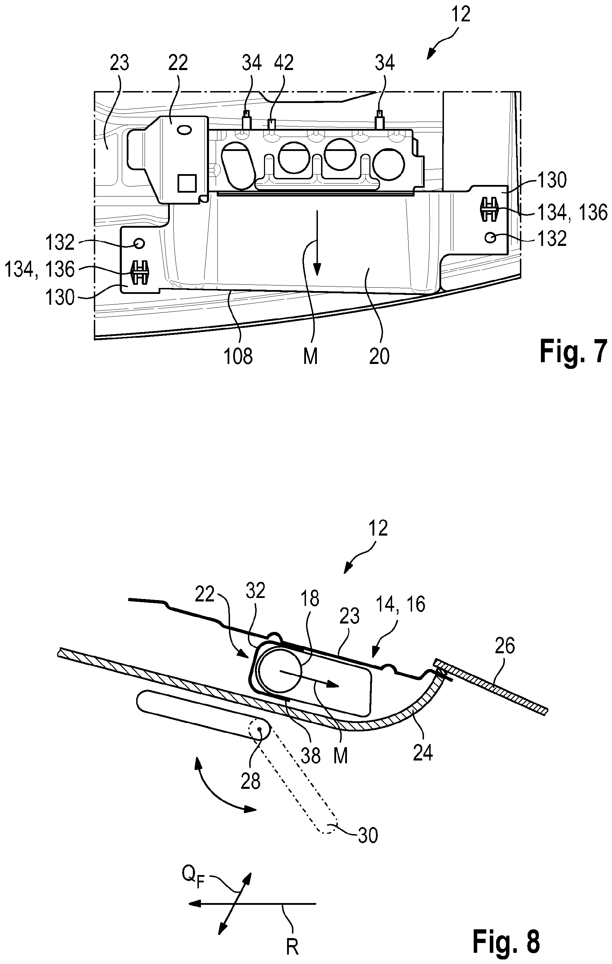

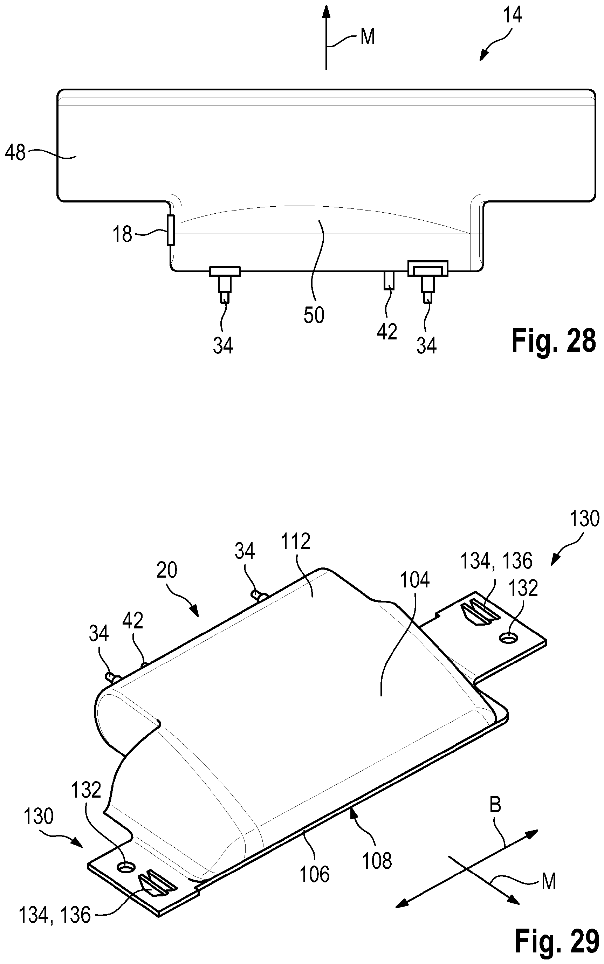

Das Gassackpaket 14 sowie der Gasgenerator 18 sind in einer flexiblen Umhüllung 20 aufgenommen (siehe z.B. Figuren 7 und 29), die weiter unten noch im Detail beschrieben ist und die in den Figuren 1 bis 6 aus Gründen der Übersichtlichkeit weggelassen wurde.

Außerdem ist ein Modulträger 22 vorgesehen (siehe beispielsweise Figuren 2 und 6), über den das Gassackmodul 12 fahrzeugfest montiert ist, beispielsweise an einem Dachrahmen 23 oder einem anderen starren Bauteil im Dachbereich des Fahrzeugs. Der Modulträger 22 ist z. B. ein Blechumformteil.

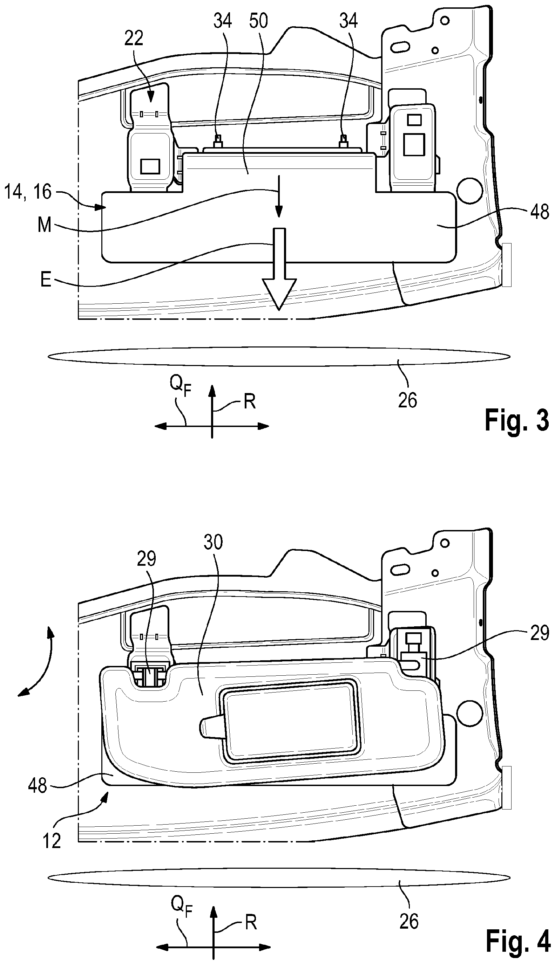

Das Gassackmodul 12 ist unterhalb einer Dachhimmelverkleidung 24 angeordnet (siehe beispielsweise Figur 5), wobei es entlang der Fahrzeuglängsrichtung R betrachtet zwischen einer Windschutzscheibe 26 des Fahrzeugs und einer Drehachse 28 bzw. den Aufhängungen 29 einer Sonnenblende 30 liegt. Die Sonnenblende 30 kann um die Drehachse 28 wie z.B. in Figur 1 angedeutet verschwenkt werden. Die Drehachse 28 ist nicht durchgehend physikalisch verwirklicht. Stattdessen ist die Sonnenblende 30 an zwei Aufhängungen 29 schwenkbar am Dachhimmel befestigt (siehe Figuren 1 und 4), wobei in der Regel die Sonnenblende 30 an der fahrzeuginneren der beiden Aufhängungen 29 ausgehakt werden kann, um sie seitlich wegzuklappen.

Zumindest das zusammengelegte Gassackpaket 14 und gegebenenfalls auch der Gasgenerator 18 liegen in Fahrzeugrichtung R, gesehen von der Fahrzeugfront zum Fahrzeugheck vor der Drehachse 28 der Sonnenblende 30.

Eine Entfaltungsrichtung E des Gassacks 16 ist entlang der Fahrzeuglängsrichtung R in Richtung zur Fahrzeugfront gerichtet und verläuft anfänglich in etwa parallel zum Fahrzeugdach und der Windschutzscheibe 26.

Das Gassackmodul 12 liegt in Fahrzeugquerrichtung Q_{F} betrachtet auf der Beifahrerseite in etwa mittig über einem Beifahrersitz (nicht dargestellt), sodass der Gassack 16 den Beifahrer frontal auffangen kann. Das Gassackmodul 12 ist also in Fahrzeugquerrichtung Q_{F} entfernt von den Fahrzeugtüren angeordnet.

Der Modulträger 22 hat eine im Querschnitt C-förmige Aufnahme 32, die den Gasgenerator 18 an der gasgeneratorseitigen Endseite des Gassackpakets 14 umgreift.

Der Gasgenerator 18 ist hier ein bekannter langgestreckter Rohrgasgenerator, von dessen zylindrischer Außenseite zwei Befestigungsbolzen 34 radial abstehen. Die Befestigungsbolzen 34 liegen auf einer Rückseite des Gasgenerators 18, auf der gegenüberliegenden Frontseite sind (nicht dargestellte) Ausströmöffnungen vorgesehen, durch die das Füllgas den Gasgenerator 18 verlässt und direkt in den Gassack 16 gelangt.

Der Gasgenerator 18 ist so im Gassackmodul 12 angeordnet, dass seine Längsachse quer zur Fahrzeuglängsrichtung R in etwa in Fahrzeugquerrichtung Q_{F} und somit in etwa senkrecht zu einer Modullängsrichtung M und der Entfaltungsrichtung E des Gassacks 16 verläuft. Die Modullängsrichtung M lässt sich in etwa durch eine Verlängerung eines Durchmessers des Gasgenerators 18 definieren, der durch die Befestigungsbolzen 34 gelegt ist.

Im Modulträger 22, genauer gesagt in einer Längsseite 36 der C-förmigen Aufnahme 32, die zwischen den beiden Armen 38 des C liegt, sind Befestigungsöffnungen 40 (siehe Figur 2) vorgesehen, durch die die Befestigungsbolzen 34 hindurchgreifen, um den Gasgenerator 18 und das Gassackpaket 14 fest am Modulträger 22 zu befestigen. Rückseitig können die Befestigungsbolzen 34 beispielsweise mit Muttern gesichert werden.

Zusätzlich zu den beiden Befestigungsbolzen 34 ist ein weiterer Bolzen vorgesehen, der einen Positionierungsbolzen 42 bildet (siehe beispielsweise Figur 7). Eine korrespondierende Öffnung 44 ist im Modulträger 22 vorgesehen (siehe Figur 2). Dieser Positionierungsbolzen 42 dient nach dem Poka-Yoke-Prinzip dazu, eine Fehlmontage des Gasgenerators 18 zu verhindern.

Bei der Entfaltung des Gassacks 16 strömt Füllgas vom Gasgenerator 18 durch ein Einblasende 46 in den Gassack 16 ein, das am Gasgenerator 18 befestigt ist, wie weiter unten im Detail beschrieben wird. Durch den Druck des sich befüllenden Gassacks 16 öffnet sich die Dachhimmelverkleidung 24 entweder an einer Schwächungszone oder beispielsweise am Übergang zur Windschutzscheibe 26 und lässt den Gassack 16 in den Fahrzeuginnenraum austreten. Dabei bildet die Dachhimmelverkleidung 24 eine untere Begrenzung eines Schusskanals für den Gassack 16. Eine obere Begrenzung dieses Schusskanals kann durch den Dachrahmen 23 vorgegeben sein. Zwischen dem Gassack 16 und der Dachhimmelverkleidung 24 befindet sich in diesem Beispiel kein weiteres starres Führungsteil wie etwa eine Führungsplatte.

Der fahrzeuginnenraumseitige Arm 38 der C-förmigen Aufnahme 32 erstreckt sich in Fahrzeuglängsrichtung R nicht über die Außenwand des Gasgenerators 18 hinaus und erhöht lediglich die Stabilität des Modulträgers 22, sodass dieser sich während der Entfaltung des Gassacks 16 nur unwesentlich verformt, trägt aber nicht zur Lenkung des Gassacks 16 durch direkten Kontakt mit dem Gassack 16 bei.

Aufgrund seiner Position am Dachrahmen 23 kommt der sich entfaltende Gassack 16 auch nicht mit der Sonnenblende 30 oder deren Aufhängung 29 in Kontakt, während er in den Fahrzeuginnenraum austritt.

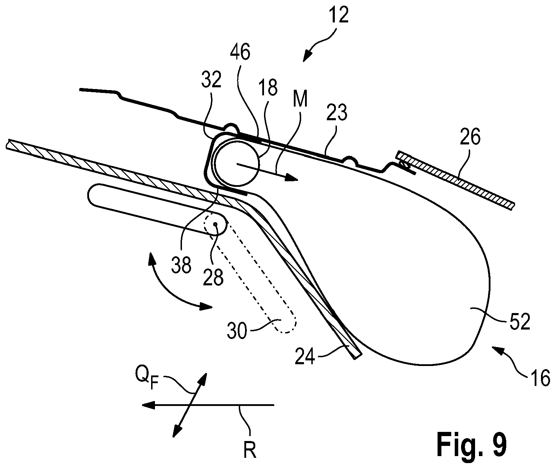

Die anfängliche Entfaltung des Gassacks 16 ist in den Figuren 8 und 9 verdeutlicht.

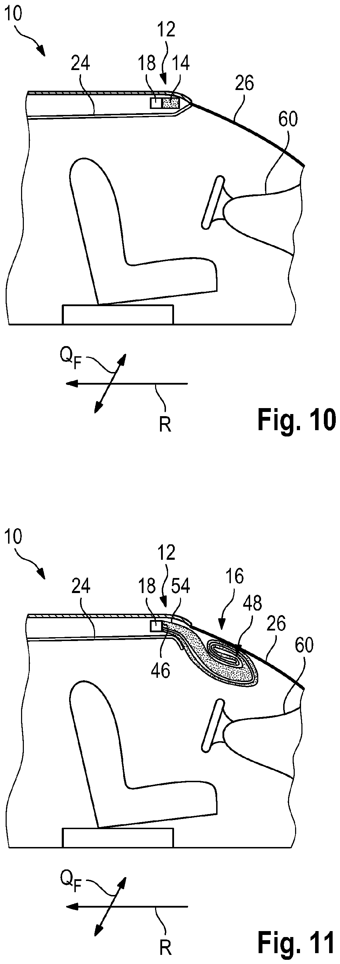

Die Figuren 10 bis 17 zeigen die Entfaltung und das Aufblasen des Gassacks 16 in größerem Detail. Auch wenn in den Figuren 11 bis 17 das Lenkrad zu sehen ist, liegt dies nur an der zu Darstellung gewählten Seitenansicht. Der Gassack 16 entfaltet sich ausschließlich auf der Beifahrerseite in diesem Beispiel, und seitlich neben dem Lenkrad.

Figur 10 stellt dabei den Ausgangszustand vor der Aktivierung des Fahrzeuginsassen-Rückhaltesystems 10 dar.

Das Gassackpaket 14 liegt zunächst zusammengelegt unterhalb der geschlossenen Dachhimmelverkleidung 24. Das Gassackpaket 14 umfasst zwei separat zusammengelegte bzw. gefaltete Abschnitte, nämlich ein Hauptpaket 48 sowie einen Verbindungsabschnitt 50 (angedeutet beispielsweise in den Figuren 1 und 3).

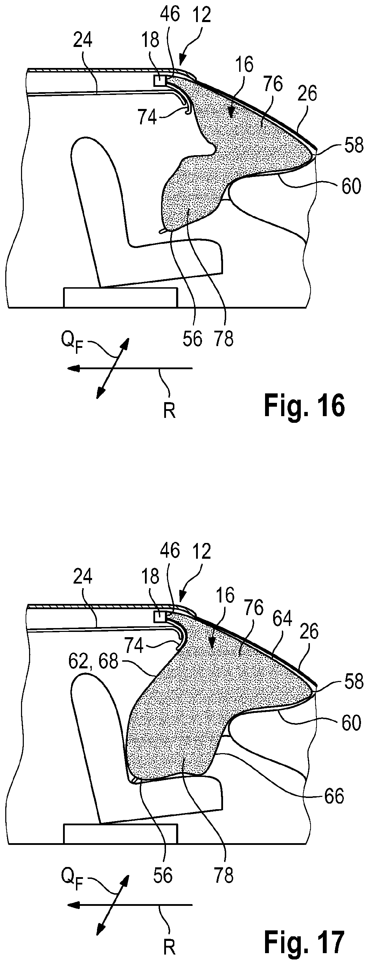

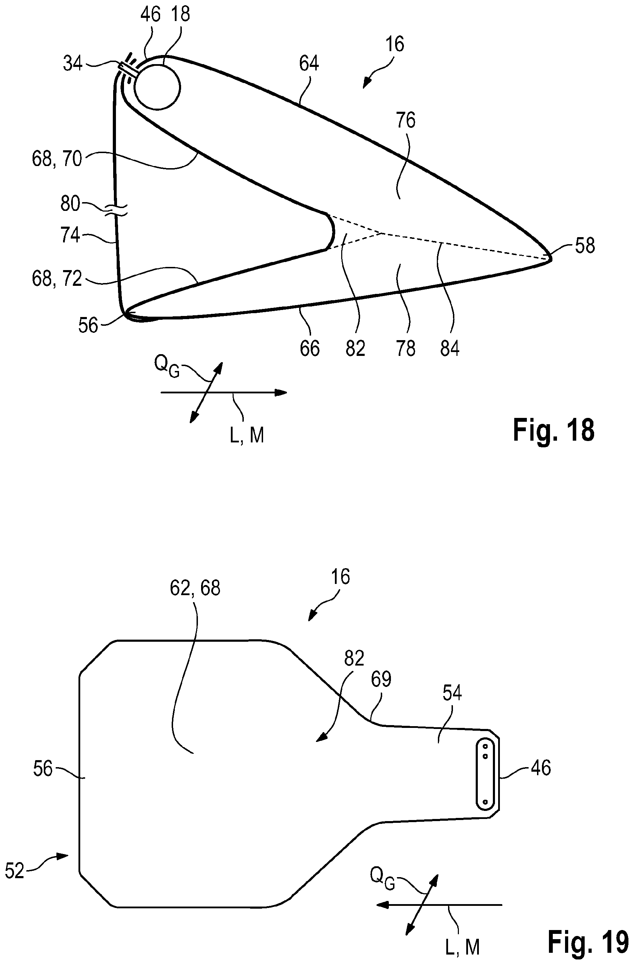

Im Hauptpaket 48 ist ein Rückhalteteil 52 des Gassacks 16 zusammengelegt, der im entfalteten und aufgeblasenen Zustand den Großteil des Gassackvolumens umfasst und der im Wesentlichen die Rückhaltewirkung des Gassacks 16 bestimmt. Dies ist in z.B. in den Figuren 17 und 19 zu erkennen.

Im Verbindungsabschnitt 50 ist ein Hals 54 des Gassacks 16 gefaltet, der zwischen dem Einblasende 46 und dem Rückhalteteil 52 ausgebildet ist (siehe auch Figur 19). In diesem Beispiel beträgt die Länge des Halses 54 in etwa 5 - 40 cm, wobei sich die exakte Länge vom Fachmann einfach an die Gegebenheiten im Fahrzeug, beispielsweise die Länge des Schusskanals und die Position der Prallfläche des Gassacks 16 im aufgeblasenen Zustand, anpassen lässt.

In Querrichtung Q_{G} des Gassacks 16 senkrecht zu dessen Längsrichtung L (siehe z.B. Fig. 19) bzw. zur Modullängsrichtung M ist der Hals 54 deutlich schmaler als der Rückhalteteil 52. Beispielsweise beträgt die Breite des Halses 54 etwa 25 - 50 % der maximalen Breite des flach ausgebreiteten Rückhalteteils 52. Somit ist das Füllvolumen des Halses 54 deutlich kleiner als das des Rückhalteteils 52.

Der Hals 54 trägt in diesem Ausführungsbeispiel nicht zur Rückhaltewirkung bei, da er hoch oben im Fahrzeug unmittelbar am Dachhimmel ansetzt. Durch die Verringerung des Volumens des Halses 54 durch die Reduzierung seiner Breite lassen sich somit Material, Füllgas und Platz im Gassackmodul 12 einsparen.

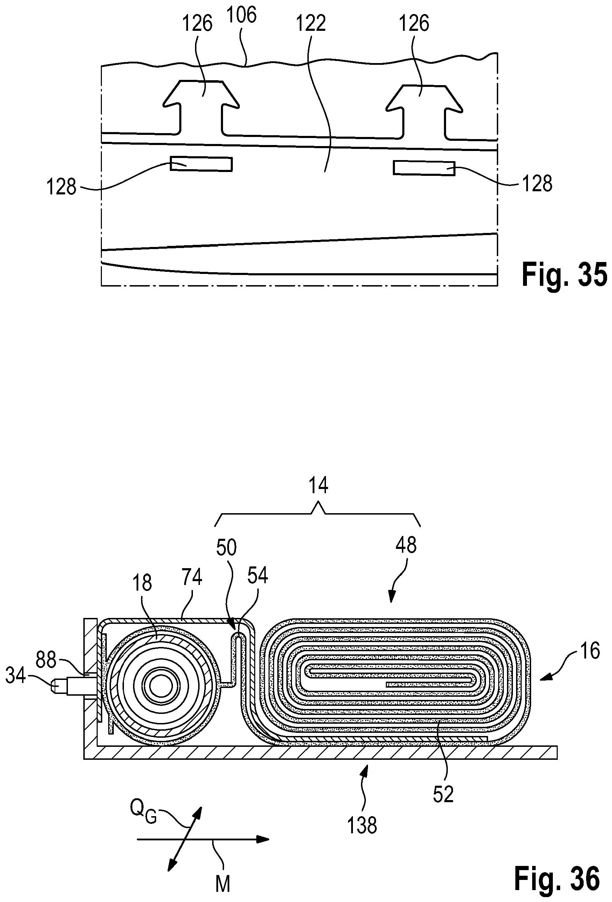

Der Verbindungsabschnitt 50 und das Hauptpaket 48 stellen zwei separat voneinander gefaltete Abschnitte des Gassackpakets 14 dar, wie beispielsweise in Figur 36 zu erkennen ist.

Während das Hauptpaket 48 beispielsweise gefaltet und gerollt ist, wie später noch näher erläutert wird, ist der Verbindungsabschnitt 50 hier lediglich in einer Zickzackfaltung mit in diesem Beispiel einer bis drei Falten zusammengelegt. Die Falten liegen dabei in der Modullängsrichtung M hintereinander aufgereiht.

In Modullängsrichtung M liegen der Gasgenerator 18, der Verbindungsabschnitt 50 und das Hauptpaket 48 linear hintereinander.

Durch diese Anordnung gelangt Füllgas vom Gasgenerator 18 zunächst in den im Verbindungsabschnitt 50 zusammengelegten Hals 54. Durch die reine Zickzackfaltung füllt sich eine Falte nach der anderen, was dazu führt, dass sich der Verbindungsabschnitt 50 streckt und somit eine in Modullängsrichtung M wirkende Kraft auf das noch gefaltete Hauptpaket 48 ausübt.

Dies führt dazu, dass das Hauptpaket 48 die Dachhimmelverkleidung 24 aufdrückt und noch im Wesentlichen gefaltet in den Fahrzeuginnenraum geschoben wird. Diese Situation ist in Figur 11 schematisch dargestellt.

In das Hauptpaket 48 gelangt zu diesem Zeitpunkt noch im Wesentlichen kein Gas, da der Gasfluss durch die noch bestehenden Falten des Verbindungsabschnitts 50 blockiert wird.

Auch wenn diese Falttechnik und das Ausschieben des Hauptpakets 48 in den Fahrzeuginnenraum hier im Zusammenhang mit einem am Dach befestigten Gassackmodul 12 beschrieben ist, lässt sich diese Technik erfindungsgemäß auf Gassackmodule übertragen, die an anderen Stellen im Fahrzeug verwendet werden, beispielsweise im Kniebereich oder in einer Sitzlehne.

Der vollständig aufgeblasene Gassack 16 hat in Seitenansicht in etwa eine Y- oder T-Form (siehe Figur 17), wobei der Stiel des Y oder T durch das Einblasende 46 und den Hals 54 gebildet wird. Der Rückhalteteil 52 umfasst ein erstes freies Ende 56 sowie ein zweites freies Ende 58. Dies ist für den aufgeblasenen Gassack 16 in Figur 17 zu erkennen, und für den nicht aufgeblasenen, flach ausgebreiteten Gassack 16 in z.B. in Figur 18, die den nicht aufgeblasenen Gassack 16 in einer seitlichen Schnittansicht zeigt, wobei die normalerweise flach aufeinanderliegenden Lagen aus Gründen der Übersichtlichkeit etwas auseinandergezogen dargestellt sind.

Im vollständig aufgeblasenen Zustand liegt das zweite freie Ende 58 in einem Übergang zwischen der Windschutzscheibe 26 und einer Armaturentafel 60 des Fahrzeugs, während sich das erste freie Ende 56 in Richtung zum Fahrzeuginsassen erstreckt und ein unteres Ende des Gassacks 16 insgesamt sowie einer Prallfläche 62 zum Auffangen des Fahrzeuginsassen bildet.

Der Gassack 16 weist im Wesentlichen drei große Außenwandabschnitte 64, 66, 68 auf (siehe Figur 18). Ein erster Außenwandabschnitt 64 erstreckt sich vom Einblasende 46 zum zweiten freien Ende 58 und bildet im aufgeblasenen Zustand eine Abstützfläche für den Gassack 16 an der Windschutzscheibe 26. Ein zweiter Außenwandabschnitt 66 erstreckt sich vom zweiten freien Ende 58 zum ersten freien Ende 56 und liegt im aufgeblasenen Zustand über der Armaturentafel 60. Ein dritter Außenwandabschnitt 68 erstreckt sich vom ersten freien Ende 56 zum Einblasende 46 und bildet im aufgeblasenen Zustand des Gassacks 16 die Prallfläche 62 für den Fahrzeuginsassen.

Der Hals 54 geht im dritten Außenwandabschnitt 68 über in den Rückhalteteil 52 mittels einer Schulter 69, die auf beiden Seiten abgeschrägt ist, sodass ein stetiger Übergang vom Hals 54 in die Prallfläche 62 gebildet ist (siehe Figur 19).

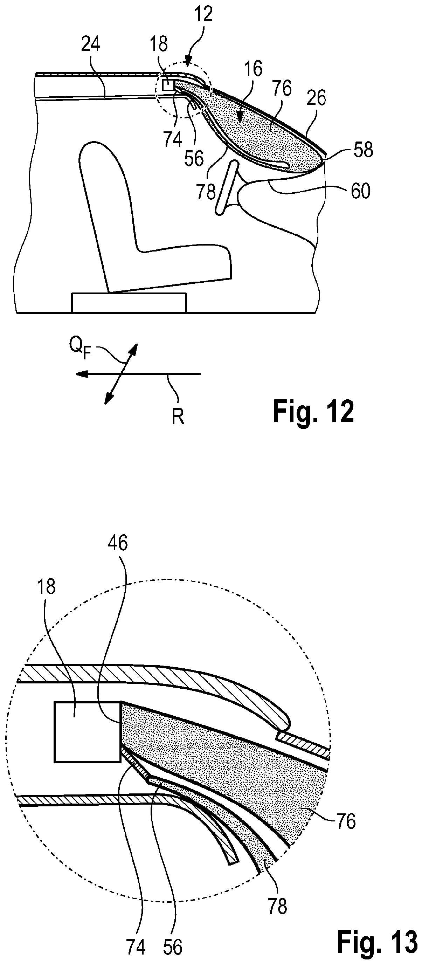

Im zusammengelegten Hauptpaket 48 ist jedoch das erste freie Ende 56 in Richtung zum Einblasende 46 zurückgefaltet, sodass Abschnitte 70, 72 des dritten Außenwandabschnitts 68 auf sich selbst zurückgefaltet sind. Dabei ist anfänglich das freie Ende 56 mit dem Einblasende 46 durch ein Fangband 74 verbunden. Im Detail ist dies in den Figuren 12, 13 und 18 dargestellt.

Das Fangband 74 ist in diesem Beispiel nicht direkt am ersten freien Ende 56 fixiert, sondern etwa 5 - 20 cm versetzt auf dem zweiten Außenwandabschnitt 66. Dies erlaubt eine kompaktere Faltung des Gassackpakets 14, wie später noch beschrieben wird.

Dies, sowie die später noch im Detail beschriebene Faltung des Hauptpakets 48, sorgen dafür, dass zu dem Zeitpunkt, in dem das Hauptpaket 48 in den Fahrzeuginnenraum gelangt, das erste freie Ende 56 noch durch das Fangband 74 im Dachbereich zurückgehalten wird. Der Rest des Hauptpakets 48 entfaltet sich derweil weiter im Fahrzeuginnenraum, wobei das in den Gassack 16 einströmende Füllgas zuerst nur einen Teilbereich des Gassacks 16 aufbläst.

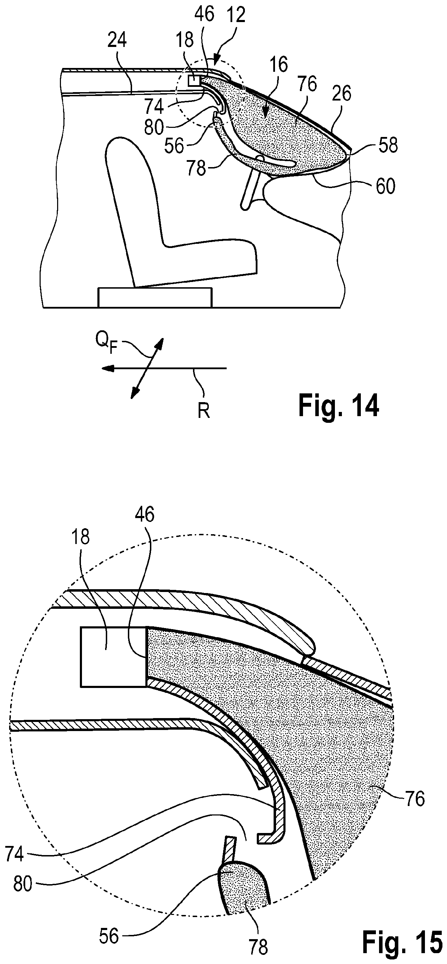

In den Figuren 14 und 18 ist zu erkennen, dass der Gassack 16 zu diesem Zeitpunkt, in dem das erste freie Ende 56 noch über das Fangband 74 mit dem Einblasende 46 verbunden ist, in etwa eine U-Form mit einem inneren Schenkel 76 und einem äußeren Schenkel 78 einnimmt.

Der innere Schenkel 76 des U wird durch den ersten Außenwandabschnitt 64 des Gassacks 16 zur Windschutzscheibe 26 hin begrenzt. Zum Fahrgastinnenraum wird der innere Schenkel 76 durch einen oberen Abschnitt 70 des dritten Außenwandabschnitts 68 begrenzt.

Der äußere Schenkel 78 wird zur Armaturentafel 60 hin durch den zweiten Außenwandabschnitt 66 begrenzt. Zum Fahrzeuginnenraum wird der äußere Schenkel 78 durch einen unteren Abschnitt 72 des dritten Außenwandabschnitts 68 begrenzt.

Die beiden Abschnitte 70, 72 des dritten Außenwandabschnitts 68 werden durch das Fangband 74 anfänglich zusammengehalten. Auf diese Weise strömt Füllgas nur in den inneren Schenkel 76 ein, während der äußere Schenkel 78 noch im Wesentlichen ungefüllt bleibt, obwohl sich das Gassackpaket 14 bereits weitgehend entfaltet hat. Diese Situation ist in den Figuren 12 - 15 gezeigt.

Bei Überschreiten einer bestimmten Zugkraft, die mit einem vorgegebenen Füllvolumen des Gassacks 16 einhergeht, löst sich nach einem ersten Zeitraum nach der Aktivierung des Gasgenerators 18 das Fangband 74. In diesem Beispiel ist hierzu auf der Fläche des Fangbands 74 eine Schwächungszone 80 ausgebildet (siehe Figur 18).

Zu dem Zeitpunkt, in dem sich das Fangband 74 löst, ist in diesem Beispiel der Hals 54 bereits vollständig aufgeblasen (siehe Figur 16).

In einem zweiten Zeitraum, der auf den ersten Zeitraum folgt, füllt sich der Gassack 16 vollständig, nachdem sich das Fangband 74 an der Schwächungszone 80 in zwei Teile geteilt hat. Der vollständig aufgeblasene Zustand ist in Figur 17 dargestellt.

Im voll aufgeblasenen Zustand hat der Gassack 16 von der Seite gesehen in etwa eine Y- oder eine T-Form, da sich der innere Schenkel 78 im Fahrzeuginnenraum nach unten geklappt hat. Die Arme des Y werden dann von zwei aufgeblasenen Abschnitten des Rückhalteteils 52 gebildet, die sich jeweils vom ersten und vom zweiten freien Ende 56, 58 in Richtung zum Einblasende 46 erstrecken und die beide in den Hals 54 übergehen.

Außerdem ist im dritten Außenwandabschnitt 68 eine im gefalteten Zustand eingestülpte Tasche 82 (siehe Figur 18) ausgebildet, die sich im voll aufgeblasenen Gassack 16 teilweise nach außen wölbt und somit die Prallfläche 62 vergrößert. Ein unteres Ende der Tasche 82 ist jedoch über ein inneres Fangband 84 permanent mit dem zweiten freien Ende 58 verbunden, um die Form des aufgeblasenen Gassacks 16 zu stabilisieren.

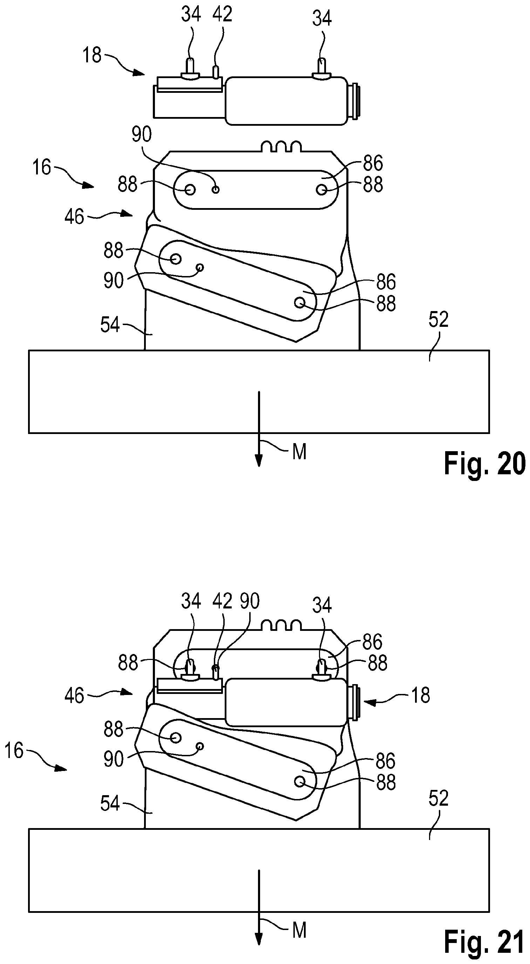

Bevorzugt wird vor dem Zusammenlegen des Gassacks 16 der Gasgenerator 18 am Einblasende 46 im Gassack 16 fixiert, wie in den Figuren 20 bis 23 gezeigt ist. Dieser Schritt könnte gegebenenfalls aber auch nach dem Zusammenlegen des Gassacks 16 erfolgen.

Am Einblasende 46 endet der Gassack 16 in zwei gegenüberliegenden Lappen 86, die sich jeweils über die gesamte Breite des Halses 54 erstrecken. Jeder der Lappen 86 weist zwei Befestigungsöffnungen 88 sowie eine Positionierungsöffnung 90 auf, die in ihrer Anordnung mit den Befestigungsbolzen 34 und dem Positionierbolzen 42 am Gasgenerator 18 übereinstimmen (siehe z.B. Figur 20).

Im Inneren des Gassacks 16 können die beiden Lappen 86 jeweils mit einer oder mehreren Verstärkungslagen verstärkt sein, die gegebenenfalls auch eine temperaturbeständige und gasdichte Beschichtung aufweisen können.

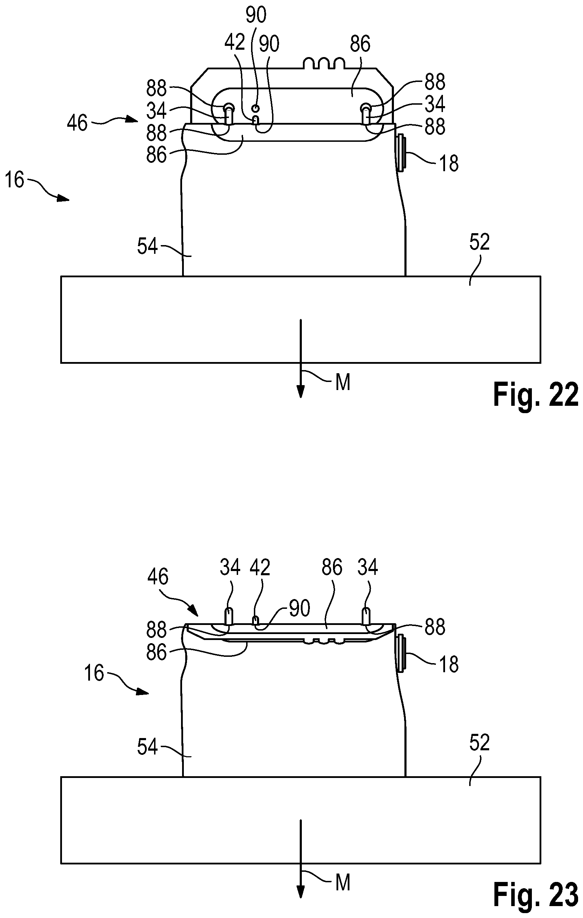

Zur Montage des Gasgenerators 18 wird dieser zwischen die beiden Lappen 86 gelegt (Figur 21) und dann die beiden Lappen 86 einzeln über den Gasgenerator 18 geschlagen, wobei jeweils die Befestigungsöffnung 88 über die Befestigungsbolzen 34 und die Positionieröffnung 90 über den Positionierbolzen 42 gezogen wird (Figuren 22 und 23).

Aufgrund der Umschlingung durch die beiden Lappen 86 und gegebenenfalls der an der Innenseite der Lappen 86 vorgesehenen Beschichtung ist das gasgeneratorseitige Einblasende 46 des Gassacks 16 nun in ausreichendem Maße gasdicht verschlossen.

Die Lappen 86 werden nun noch mittel Klemmscheiben und/oder Schraubmuttern an den Befestigungsbolzen 34 gesichert (nicht dargestellt).

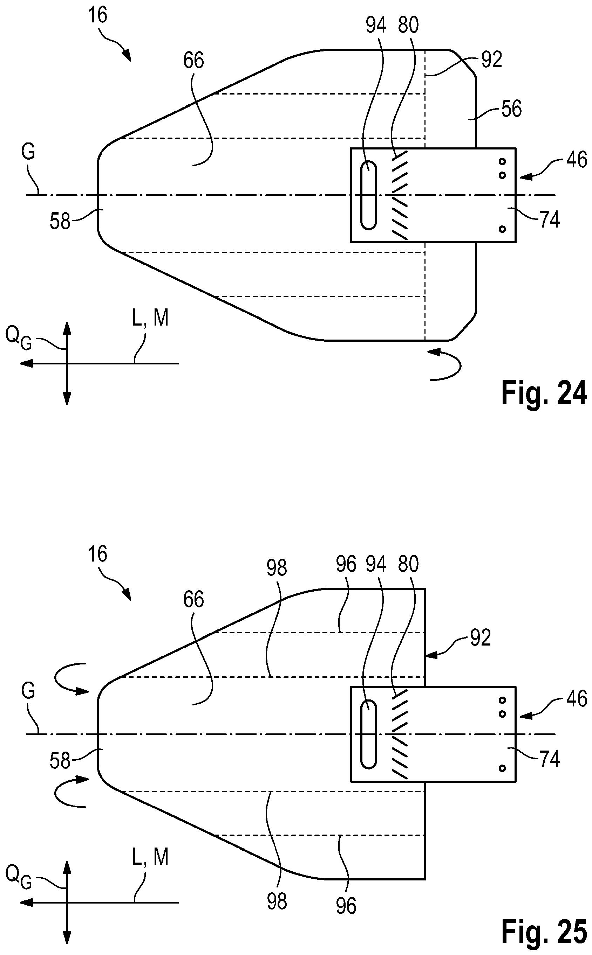

Um den Gassack 16 zum Gassackpaket 14 zusammenzulegen, wird der Gassack 16 zunächst wie in Figur 24 gezeigt flach ausgebreitet, wobei das erste Ende 56 zum Einblasende 46 zurückgeschlagen ist.

Im Bereich des ersten freien Endes 56 liegen somit die beiden Schenkel 76, 78 des Gassacks 16 übereinander. Der dritte Außenwandabschnitt 68 ist dabei in den Abschnitten 70, 72 auf sich selbst zurückgefaltet.

Der erste Außenwandabschnitt 64 und der zweite Außenwandabschnitt 66 verlaufen dagegen gestreckt jeweils vom zweiten freien Ende 58 zum Einblasende 46.

Das Fangband 74 wird so gelegt, dass sein freies Ende auf dem Einblasende 46 liegt.

In einem ersten Faltschritt wird nun das erste freie Ende 56 um eine senkrecht zur Gassacklängsrichtung L (die im flach ausgebreiteten Gassack 16 mit der Modullängsrichtung M zusammenfällt) liegende Faltlinie 92 einmal umgeschlagen, jedoch nicht über einen Ansatzpunkt 94 des Fangbands 74 auf dem zweiten Außenwandabschnitt 66 (siehe Figuren 24 und 25). Abhängig von der Form des Gassacks könnte dieser Faltschritt auch weggelassen werden.

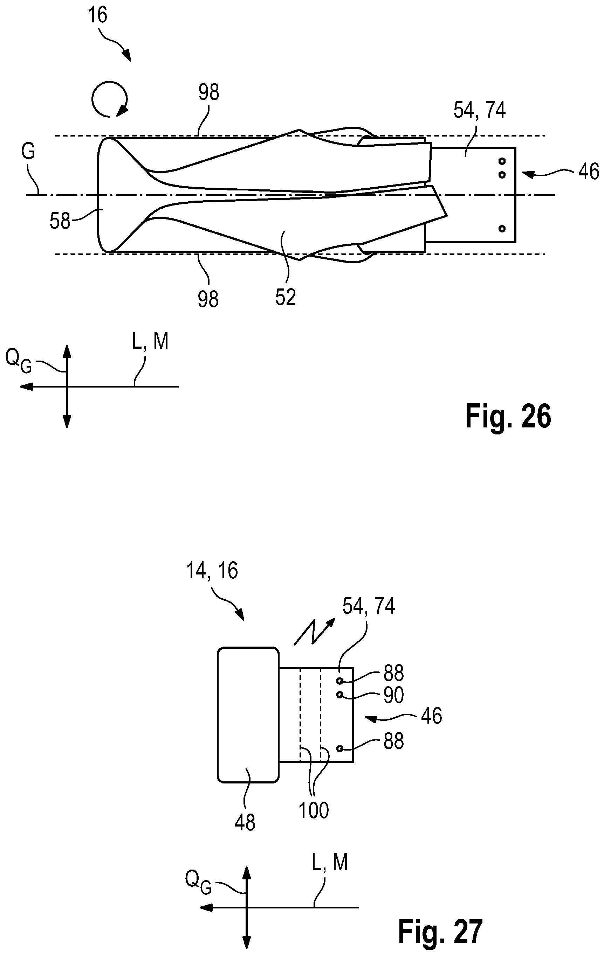

Nun werden in einem zweiten Faltschritt die beiden seitlichen Bereiche des Gassacks 16 entlang von parallel zur Gassacklängsrichtung L laufenden Faltlinien 96, 98 in einer Zickzackfalte nach innen geschlagen. Dies zeigen Figuren 25 und 26. Die beiden Faltlinien 98 begrenzen nun den Gassack 16 in Querrichtung Q_{G} seitlich nach außen.

Der Abstand der Faltlinien 96, 98 zueinander und zu einem Umfangsrand des Gassacks 16 ist so gewählt, dass in der Mitte des Gassacks kein Überlapp der seitlichen Bereiche des Gassacks 16 entsteht, wobei die Mitte des Gassacks 16 durch eine gedachte Mittelgerade G definiert ist, die vom Einblasende 46 zum zweiten freien Ende 58 verläuft und die symmetrisch zum Einblasende 46 angeordnet ist.

Im ausgebreiteten Zustand kann der Gassack 16 symmetrisch bezüglich dieser Mittelgeraden G sein, dies ist aber nicht zwingend erforderlich, sondern wird unter anderem durch die Geometrie des Fahrgastinnenraums, der Windschutzscheibe 26 und der Armaturentafel 60 bestimmt.

Der in Figur 26 dargestellte teilgefaltete Gassack 16 wird nun in einem Rollschritt angefangen vom zweiten freien Ende 58 her aufgerollt, beispielsweise in drei bis zehn Umdrehungen, insbesondere in sechs Umdrehungen, in Richtung zum Einblasende 46. Das Resultat dieses Faltschrittes ist in Figur 27 gezeigt. Der aufgerollte Bereich bildet nun das Hauptpaket 48. Aufgerollt wird der Gassack 16 dabei nur bis zum Ende des Rückhalteteils 52 des Gassacks 16. Der Bereich des Halses 54 und des Fangbands 74, die in Richtung zum Einblasende 46 darüber hinausstehen (siehe Figuren 26 und 27), bleiben von diesem Faltschritt unberührt.

In einem weiteren Faltschritt wird nun der über das Hauptpaket 48 überstehende Bereich des Halses 54 sowie gegebenenfalls des Fangbands 74 in eine reine Zickzackfaltung mit etwa ein bis drei Falten gelegt, wobei die Faltlinien 100 senkrecht zur Modulrichtung M und somit parallel zu einer Längsachse des Gasgenerators 18 (hier nicht dargestellt) ausgerichtet sind. Nun hat das zusammengelegte Gassackpaket 14 die in den Figuren 27 und 36 dargestellte Gestalt.

Die gleiche Lochstruktur 88, 90 wie an den Lappen 86 des Gassacks 16 ist auch am freien Ende des Fangbands 74 verwirklicht, und auch das Fangband 74 wird mit den Befestigungsöffnungen 88 und der Positionierungsöffnung 90 über die Befestigungsbolzen 34 und den Positionierungsbolzen 42 gezogen (siehe auch Figur 36). Die beiden Lappen 86 und das Fangband 74 liegen nun in drei Lagen übereinander, wobei die Befestigungsbolzen 34 des Gasgenerators 18 alle drei fluchtenden Befestigungsöffnungen 88 durchgreifen. Gleiches gilt für Positionierungsöffnungen 90.

Im eingebauten Zustand ist der Gassack 16 über die Befestigungsbolzen 34 lasttragend mit dem Modulträger 22 verbunden. Auch die auf das Fangband 74 wirkenden Zugkräfte werden über die Befestigungsbolzen 34 auf den Modulträger 22 übertragen.

Nach dem Einsetzen des Gasgenerators 18 und dem Zusammenlegen des Gassacks 16 hat das Gassackpaket 14 die in Figur 28 dargestellte Form.

Nachdem der Gasgenerator 18 im Gassack 16 fixiert wurde und der Gassack 16 zum Gassackpaket 14 zusammengelegt wurde, wird das Gassackpaket 14 zusammen mit dem Gasgenerator 18 in die Umhüllung 20 eingesetzt.

Die Figuren 29 bis 35 zeigen die Umhüllung 20 im Detail.

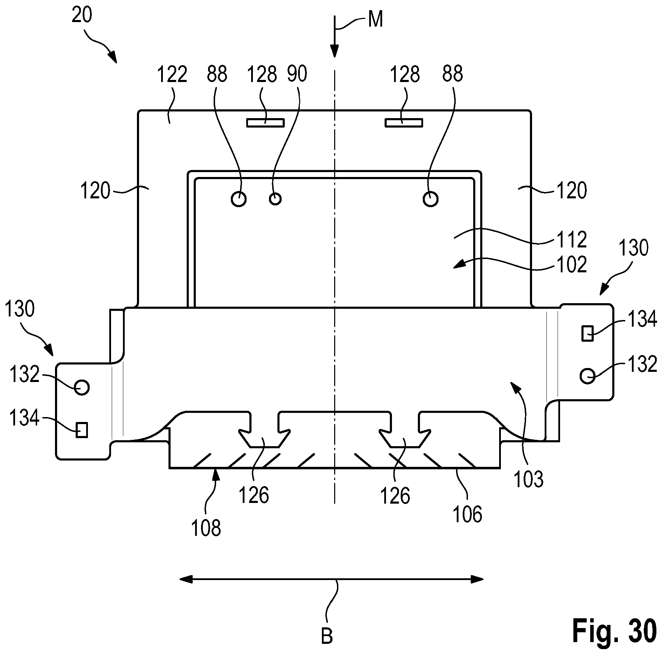

In diesem Beispiel besteht die Umhüllung 20 vollständig (natürlich mit Ausnahme von eventuellen Nähten) aus Gassackgewebe und ist aus exakt zwei Zuschnittsteilen 102, 103 zusammengesetzt (siehe Figur 30).

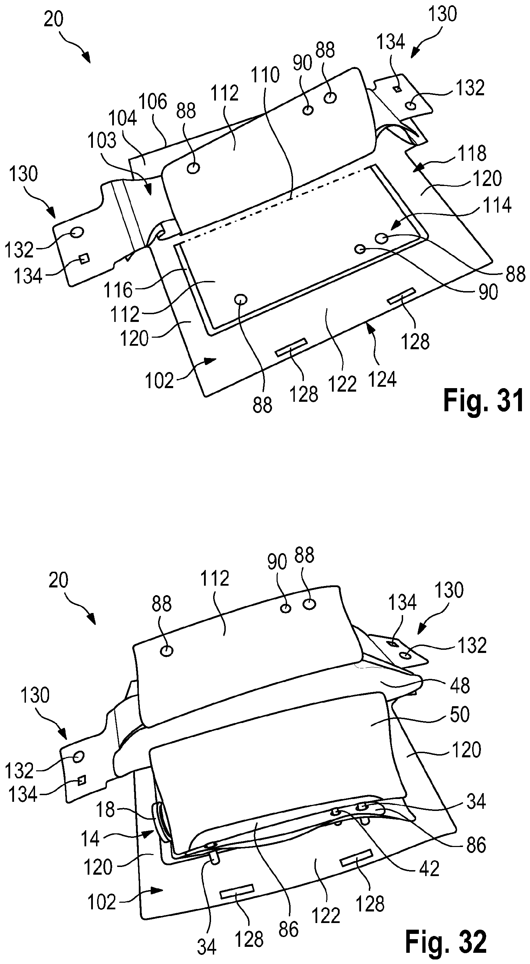

Die Umhüllung 20 weist eine Aufnahmetasche 104 (siehe Figur 31) auf, die durch zwei übereinandergeschlagene Abschnitte des ersten Zuschnittsteils 102 gebildet ist und die zur Aufnahme des Hauptpakets 48 des Gassackpakets 14 dient. Ein Boden 106 der Aufnahmetasche 104 ist mit einer Schwächungszone 108 versehen (siehe beispielsweise Figur 30) und erstreckt sich in einer Richtung B senkrecht zur Modulrichtung M.

Die beiden vom Boden 106 abgewandten Ränder 110 (siehe Figur 31) der Aufnahmetasche 104 gehen einstückig und nahtlos in jeweils einen Haltelappen 112 über. Die beiden Haltelappen 112 bilden eine Gasgeneratorfixierung 114 zur Fixierung des Gasgenerators 18 in der Umhüllung 20 und weisen an ihren freien Enden jeweils ein Öffnungsmuster auf, das der Anordnung der Befestigungsbolzen 34 und des Positionierungsbolzens 42 entspricht. Entsprechend sind am freien Rand jedes Haltelappens 112 zwei Befestigungsöffnungen 88 sowie eine Positionierungsöffnung 90 vorgesehen.

Die Aufnahmetasche 104 und die Haltelappen 112 sind gemeinsam im ersten Zuschnittsteil 102 realisiert, indem das erste Zuschnittsteil 102 auf sich selbst zurückgeschlagen wird und die an die Faltlinie anschließenden Längsränder abschnittsweise verbunden werden, um die Aufnahmetasche 104 zu bilden. Die freien, über die Aufnahmetasche 104 hinausgehenden Abschnitte bilden dann die Haltelappen 112 (siehe z.B. Figuren 30 und 31).

Einer der Haltelappen 112, in Figur 31 der untere, flach ausgebreitete Haltelappen 112, ist durch eine U-förmige Schnittlinie 116 von einem umgebenden Rest des ersten Zuschnittsteils 102 abgetrennt. Durch die Schnittlinie 116 entsteht ein Bügel 118, der zwei seitlich des Haltelappens 112 liegende Riemenabschnitte 120 sowie einen die beiden Riemenabschnitte 120 verbindenden Steg 122 aufweist. Die Riemenabschnitte 120 gehen an ihrem dem Steg 122 gegenüberliegenden Ende einstückig in die Aufnahmetasche 104 über.

Der Bügel 118 ist Teil einer Gassackpaketfixierung 124. Diese weist außerdem wenigstens ein Paar erster und zweiter Fixierelemente 126, 128 auf, die ineinandersteckbar und somit aneinander fixierbar sind. Hier sind zwei Paare von Fixierelementen 126, 128 vorgesehen, die parallel zur Richtung B des Bodens 106 nebeneinander angeordnet sind. Die genaue Lage und Anzahl von Fixierelementen sowie deren Ausbildung liegen natürlich im Ermessen des Fachmanns.

In diesem Beispiel sind die ersten Fixierelemente 126 am zweiten Zuschnittsteil 103 ausgebildet, das sich parallel zur Richtung des Bodens B über die Aufnahmetasche 104 erstreckt. Die ersten Fixierelemente 126 haben in diesem Beispiel die Form von pfeilförmigen Haken (siehe insbesondere Figuren 30 und 35), die an einem zum Boden 106 weisenden Rand des zweiten Zuschnittsteils 103 ausgeformt sind.

Die beiden zweiten Fixierelemente 128 sind im Steg 122 ausgeformt und hier jeweils durch eine längliche Öffnung gebildet, durch die der Haken des ersten Fixierelements 126 so hindurchsteckbar ist, dass die Hakenränder den Rand der Öffnung hintergreifen und das erste Fixierelement 126 am Steg 122 fixieren. Figur 35 zeigt eine Detailansicht der Fixierelemente 126, 128.

Das zweite Zuschnittsteil 103 ist in diesem Ausführungsbeispiel aus mehrlagigem Gassackgewebe gefertigt, während das erste Zuschnittsteil 102 aus einem einlagigen Gassackgewebe zugeschnitten ist. Das Zuschneiden erfolgt hier jeweils durch Laserschneiden, wodurch im zweiten Zuschnittsteil 103 die Ränder der mehreren Lagen direkt miteinander verschweißt werden, ohne dass eine weitere Fixierung der Ränder aneinander notwendig wäre. Da somit auch die ersten Fixierelement 126 aus mehrlagigem Gassackgewebe bestehen, haben sie eine ausreichende Steifigkeit, um sich in den Öffnungen der zweiten Fixierelemente 128 zu verhaken.

Das zweite Zuschnittsteil 103 erstreckt sich seitlich, also parallel zur Bodenrichtung B, über die Aufnahmetasche 104 hinaus. An jedem seiner freien Enden ist ein Fixierabschnitt 130 gebildet, der der fahrzeugfesten Befestigung der Umhüllung 20 dient. Diese Befestigung muss nicht die volle Last des sich entfaltenden Gassacks 16 tragen, sondern dient hauptsächlich der Positionierung des Gassackmoduls 12 am Dachrahmen 23.

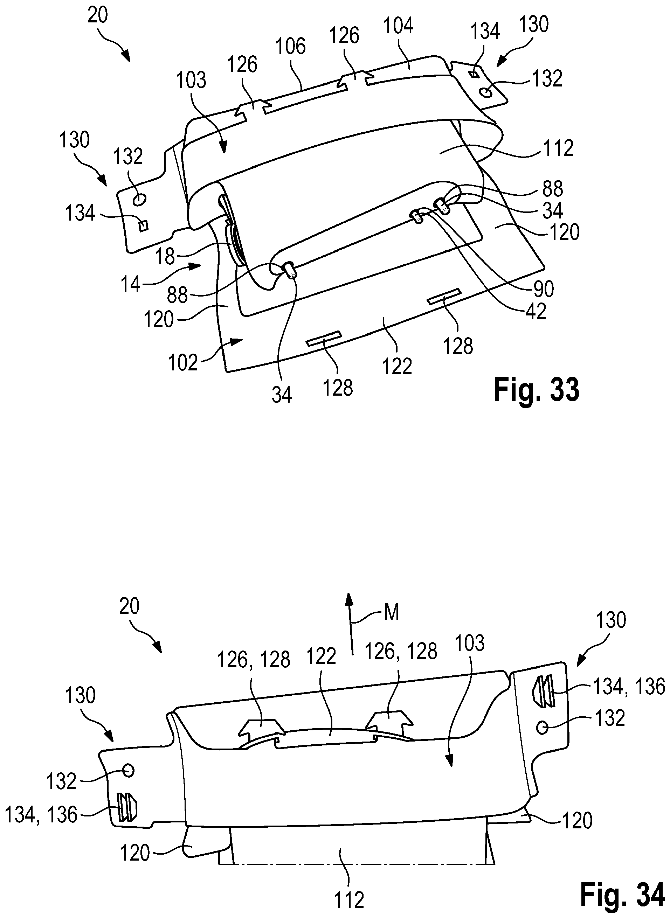

Die Fixierabschnitte 130 werden hier jedoch auch zur Vorfixierung des Gassackmoduls 10 im Fahrzeug genutzt. Hierzu weist jeder der Fixierabschnitte 130 neben einer Befestigungsöffnung 132, durch die beispielsweise eine Schraube zur fahrzeugfesten Befestigung eingesetzt wird, eine weitere Vorfixierungsöffnung 134 auf, in der ein Befestigungsclip 136 eingesetzt ist (siehe Figur 34). Beim Montieren des Gassackmoduls 10 am Fahrzeug wird der Befestigungsclip 136 in eine Öffnung am Dachrahmen 23 oder am Modulträger 22 geschoben und hält das Gassackmodul 10 in Position, bis die endgültige Befestigung erfolgt ist.

Die Befestigungsöffnung 132 und die Vorfixierungsöffnung 134 sind in den beiden Fixierabschnitten 130 jeweils parallel zur Modullängsrichtung M übereinander, aber mit unterschiedlicher Reihenfolge angeordnet (siehe z.B. Figur 30).

Zum Einsetzen des Gassackpakets 14 in die Umhüllung 20 wird zunächst das Hauptpaket 48 in die Aufnahmetasche 104 eingeschoben (siehe Figuren 31 und 32). Dann werden die beiden Haltelappen 112 nacheinander mit den Befestigungsöffnungen 88 und den Positionierungsöffnungen 90 über die Befestigungsbolzen 34 und den Positionierbolzen 42 des Gasgenerators 18 gezogen, sodass sie den Gasgenerator 18 sowie natürlich das Einblasende 46 des Gassacks 16 rückseitig des Gasgenerators 18 umgreifen (siehe Figuren 32 und 33 sowie 37 und 38).

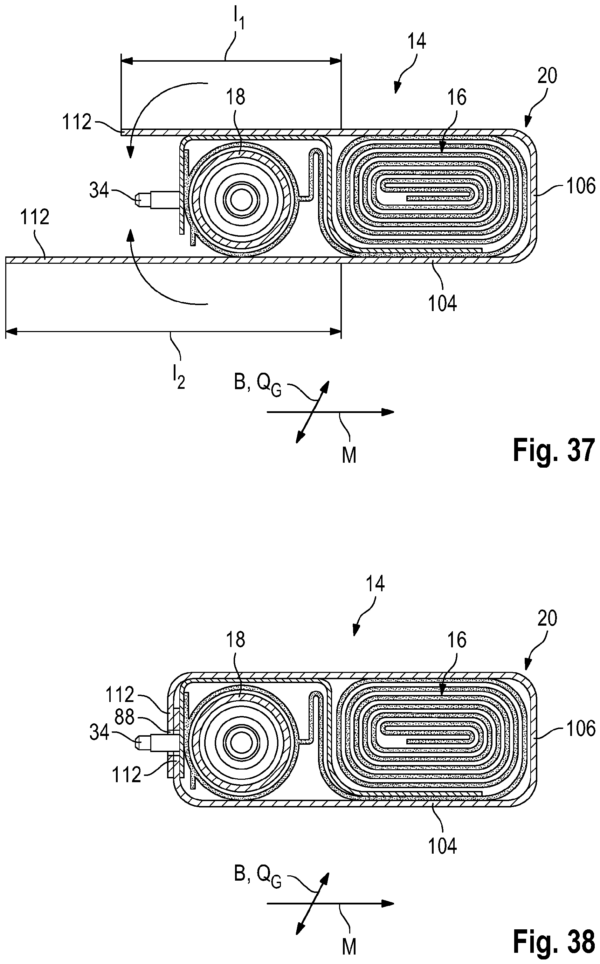

In Modullängsrichtung M können die beiden Haltelappen 112 unterschiedliche Längen I₁, I₂ aufweisen, wie dies beispielsweise in Figur 37 dargestellt ist. Auf diese Weise lassen sich die Zugkräfte, die über die Haltelappen 112 auf die Befestigungsbolzen 34 des Gasgenerators 18 wirken, in einem gewissen Maß einstellen. Dies führt dazu, dass die Ausrichtung des Gasgenerators 18 bezüglich einer Rotation um dessen Längsachse durch die Wahl der Länge der Haltelappen 112 festlegbar ist. Normalerweise ist es gewünscht, dass sich die Befestigungsbolzen 34 exakt in Modullängsrichtung M erstrecken. Es könnte jedoch, beispielsweise um die Montage am Dachrahmen zu erleichtern, auch von Vorteil sein, wenn die Bolzen 34 um wenige Grad gegenüber der Modullängsrichtung M verkippt sind. Da der Gasgenerator 18 meist einen flächigen Gasaustrittsbereich (nicht dargestellt) aufweist, ist eine Verkippung um wenige Grad ohne Einfluss auf die Gasausströmung und das Aufblasverhalten des Gassacks 16.

Nachdem die Gasgeneratorfixierung 114 wie beschrieben geschlossen ist (dargestellt in Figur 33), wird nun der Bügel 118 über die Haltelappen 112 gezogen. Im nächsten Schritt wird der Steg 122 unter dem zweiten Zuschnittsteil 103 hindurchgeschoben, und die Haken der ersten Fixierelemente 126 werden durch die Öffnungen der zweiten Fixierelementen 128 gesteckt (siehe Figur 34). Die Riemenabschnitte 120 liegen nun seitlich der Haltelappen 112 über dem Hauptpaket 48 des Gassackpakets 14 und halten dieses sicher in der Aufnahmetasche 104. Somit ist die Gassackpaketfixierung 124 geschlossen.

Das Gassackpaket 14 mit der Umhüllung 20 kann nun in den Modulträger 22 eingesetzt werden, um das Gassackmodul 10 am Fahrzeug zu montieren.

Bei der Aktivierung des Gassackmoduls 10 öffnet sich die Schwächungszone 108 am Boden 106 der Aufnahmetasche 104, um das Gassackpaket 14 austreten zu lassen. Die Gasgenerator-Fixierung 114, die GassackpaketFixierung 124 sowie die fahrzeugfeste Fixierung über die Fixierabschnitte 130 bleiben geschlossen.

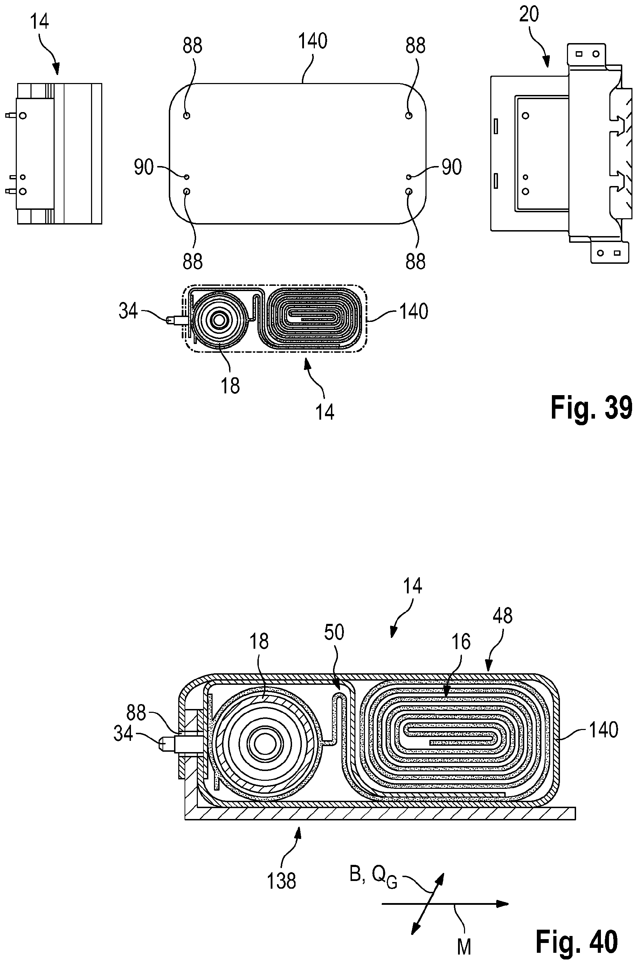

Um die Zickzackfaltung des Halses 54 im Verbindungsabschnitt 50 während des Einsetzens des Gassackpakets 14 in die Umhüllung 20 besser zu fixieren, kann in einem alternativen Verfahren eine Zwischenhülle 140 zum Einsatz kommen, wie die Figuren 39 bis 44 verdeutlichen.

Die Zwischenhülle 140 ist ein im Wesentlichen rechteckiges Stück Gassackgewebe, das an beiden freien Enden ein den Befestigungsbolzen 34 und dem Positionierungsbolzen 42 des Gasgenerators 18 entsprechendes Lochmuster mit zwei Befestigungsöffnungen 88 und einer Positionierungsöffnung 90 aufweist (siehe Figur 39).

Das fertig zusammengelegte Gassackpaket 14 inklusive des Gasgenerators 18 wird zunächst in die Zwischenhülle 140 eingeschlagen, wobei beide Enden der Zwischenhülle 140 über die Bolzen 34, 42 des Gasgenerators 18 gezogen werden. Dies ist in Figur 40 dargestellt, wobei ein bekanntes Faltgerät 136 zu Hilfe genommen wurde.

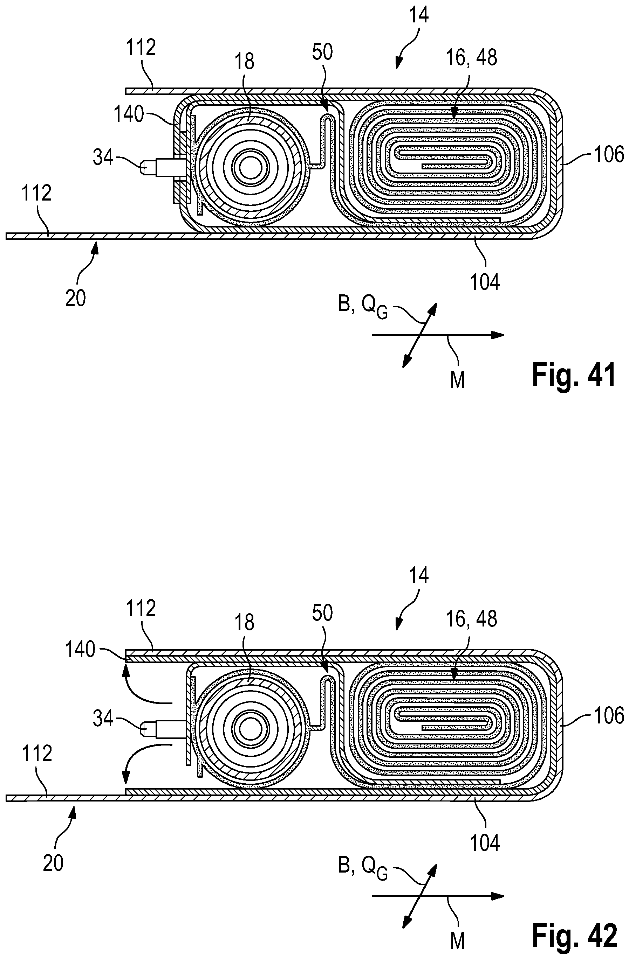

Das von der Zwischenhülle 140 fest umgebene Gassackpaket 14 wird nun in die Umhüllung 20 eingesetzt, wobei das Hauptpaket 48 in die Aufnahmetasche 104 eingeschoben wird (siehe Figur 41).

Jetzt wird die Zwischenhülle 140 wieder geöffnet, indem ihre beiden Enden von den Bolzen 34, 42 des Gasgenerators 18 abgezogen werden. Dies ist in Figur 42 dargestellt.

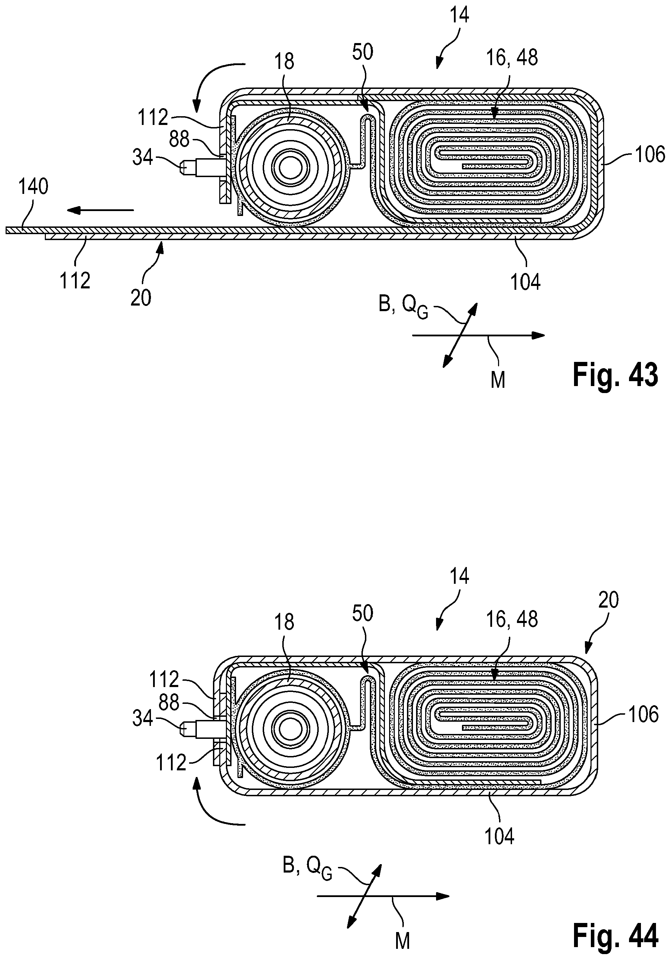

Einer der beiden Haltelappen 112 der Umhüllung 20 wird nun über die Bolzen 34, 42 des Gasgenerators 18 gezogen, um die Umhüllung 20 am Gasgenerator 18 zu fixieren. Jetzt kann die Zwischenhülle 140 zwischen dem Gassackpaket 14 und der Umhüllung 20 herausgezogen werden, wie in Figur 43 gezeigt ist. Hierbei kann sich die Faltung insbesondere des Verbindungsabschnitts 50 nicht mehr verändern, da der eine bereits mit dem Gasgenerator 18 verbundene Haltelappen 112 das Gassackpaket 14 in seiner gewünschten Form hält.

Nach Entfernen der Zwischenhülle 140 wird auch der zweite Haltelappen 112 geschlossen, indem seine Öffnungen über die Bolzen 34, 42 des Gasgenerators 18 gezogen werden.

Abschließend wird noch die Gassackpaketfixierung 124 geschlossen, indem, wie oben beschrieben, der Bügel 118 über den Gasgenerator 18 und die diesen umgebenden Haltelappen 112 gezogen, der Steg 122 unter das zweite Zuschnittsteil 103 geschoben wird und die Fixierelemente 126, 128 geschlossen werden.

## Patentansprüche

1. Fahrzeuginsassen-Rückhaltesystem mit einem Gassackmodul (12), wobei das Gassackmodul (12) unter einer Dachhimmelverkleidung (24) des Fahrzeugs im Bereich einer Sonnenblende (30) angeordnet ist, wobei das Gassackmodul (12) einen Gassack (16) sowie einen Gasgenerator (18) aufweist, der bei einer Aktivierung Füllgas für den Gassack (16) liefert, wobei der Gassack (16) vor der Aktivierung zu einem Gassackpaket (14) so zusammenlegt ist, dass ein Hauptpaket (48) gebildet ist, das einen Rückhalteteil (52) des Gassacks (16) enthält, der einen Großteil des Gassackvolumens bildet, sowie ein Verbindungsabschnitt (50), der einen Hals (54) des Gassacks (16) umfasst, der den Rückhalteteil (52) mit dem Gasgenerator (18) verbindet, wobei der Rückhalteteil (52) anders als der Hals (54) gefaltet ist, wobei der gefaltete Verbindungsabschnitt (50) zwischen dem Gasgenerator (18) und dem Hauptpaket (48) angeordnet ist, sodass der Gasgenerator (18), der Verbindungsabschnitt (50) und das Hauptpaket (48) in Modullängsrichtung (M) linear hintereinander liegen, wobei das Hauptpaket (48) des Gassackpakets (14) in Längsrichtung des Gasgenerators (18) breiter ist als der Verbindungsabschnitt (50), wobei der gestreckte Verbindungsabschnitt (50) eine Länge von ca. 5 cm bis 50 cm, insbesondere 15 cm bis 50 cm, hat, und der Gassack (16) ein erstes freies Ende (56) aufweist, das den Rückhalteteil (52) begrenzt, wobei das erste freie Ende (56) vor der Aktivierung über ein Fangband (64) im Bereich des Gasgenerators (18) fixiert ist, das eine Schwächungszone (80) aufweist, und das Fangband (64) zumindest so lange intakt ist, bis der Hals (54) vollständig mit Gas gefüllt ist.

2. Fahrzeuginsassen-Rückhaltesystem nach Anspruch 1, **dadurch gekennzeichnet, dass** der Hals (54) zu einer bis drei Zickzackfalten gefaltet ist.

3. Fahrzeuginsassen-Rückhaltesystem nach einem der vorhergehenden Ansprüche, **dadurch gekennzeichnet, dass** im entfalteten und aufgeblasenen Gassack (16) der Hals (54) in Fahrzeugquerrichtung (Q_{F}) gesehen schmaler ist als der Rückhalteteil (52).

4. Fahrzeuginsassen-Rückhaltesystem nach einem der vorhergehenden Ansprüche, **dadurch gekennzeichnet, dass** der Verbindungsabschnitt (50) und das Hauptpaket (48) so zusammengelegt und so im Gassackpaket (14) angeordnet sind, dass sich das Hauptpaket (48) erst entfaltet, wenn es vollständig im Fahrzeuginnenraum liegt.

5. Fahrzeuginsassen-Rückhaltesystem nach einem der vorhergehenden Ansprüche, **dadurch gekennzeichnet, dass** der Rückhalteteil (52) im Hauptpaket (14) sowohl gefaltet als auch gerollt ist.

6. Fahrzeuginsassen-Rückhaltesystem nach einem der vorhergehenden Ansprüche, **dadurch gekennzeichnet, dass** der Gassack (16) ein Beifahrergassack ist.

## Claims

1. A vehicle occupant restraint system comprising an airbag module (12), wherein the airbag module (12) is arranged beneath a roof liner (24) of the vehicle in the area of a sun visor (30), wherein the airbag module (12) includes an airbag (16) and an inflator (18) which upon activation supplies filling gas for the airbag (16), wherein prior to activation the airbag (16) is folded to form an airbag package (14) so that a main package (48) which includes a restraint part (52) of the airbag (16) constituting a major part of the airbag volume as well as a connecting portion (50) is formed comprising a neck (54) of the airbag (16) which connects the restraint part (52) to the inflator (18), wherein the restraint part (52) is folded differently from the neck (54), wherein the folded connecting portion (50) is arranged between the inflator (18) and the main package (48), so that the inflator (18), the connecting portion (50) and the main package (48) are located linearly in series in the longitudinal module direction (M), wherein in the longitudinal direction of the inflator (18) the main package (48) of the airbag package (14) is wider than the connecting portion (50), wherein the stretched connecting portion (50) has a length of from about 5 cm to 50 cm, especially from 15 cm to 50 cm, and the airbag (16) includes a first free end (56) delimiting the restraint part (52), wherein prior to activation the first free end (56) is fixed in the area of the inflator (18) via a tether (64) having a weakened zone (80), and the tether (64) is at least intact at least until the neck (54) is completely filled with gas.

2. The vehicle occupant restraint system according to claim 1, **characterized in that** the neck (54) is folded into one to three zigzag folds.

3. The vehicle occupant restraint system according to any one of the preceding claims, **characterized in that** in the deployed and inflated airbag (16), the neck (54) which, when viewed in the transverse vehicle direction (Q_{F}), is narrower than the restraint part (52).

4. The vehicle occupant restraint system according to any one of the preceding claims, **characterized in that** the connecting portion (50) and the main package (48) are folded and arranged in the airbag package (14) so that the main package (48) will not deploy before it is completely located inside the vehicle interior.

5. The vehicle occupant restraint system according to any one of the preceding claims, **characterized in that** in the restraint part (52) is both folded an rolled in the main package (14).

6. The vehicle occupant restraint system according to any one of the preceding claims, **characterized in that** in the airbag (16) is a passenger airbag.

## Revendications

1. Système de retenue des occupants d'un véhicule avec un module airbag (12), pour lequel le module airbag (12) est disposé sous un ciel de toit (24) du véhicule dans la zone d'un pare-soleil (30), pour lequel le module airbag (12) présente un coussin gonflable (16) ainsi qu'un générateur de gaz (18), qui, lors d'une activation, fournit du gaz de remplissage pour le coussin gonflable (16), pour lequel le coussin gonflable (16) est avant activation plié en un paquet de coussin gonflable (14) de telle sorte qu'un paquet principal (48) est formé, lequel contient une partie de retenue (52) du coussin gonflable (16), laquelle forme une grande partie du volume du coussin gonflable, ainsi qu'une section de liaison (50), qui comprend un col (54) du coussin gonflable (16), qui relie la partie de retenue (52) au générateur de gaz (18), pour lequel la partie de retenue (52) est pliée différemment du col (54), pour lequel la section de liaison pliée (50) est disposée entre le générateur de gaz (18) et le paquet principal (48), de sorte que le générateur de gaz (18), la section de liaison (50) et le paquet principal (48) se trouvent linéairement l'un derrière l'autre dans la direction longitudinale (M) du module, pour lequel le paquet principal (48) du paquet de coussin gonflable (14) est plus large dans la direction longitudinale du générateur de gaz (18) que la section de liaison (50), pour lequel la section de liaison (50) étirée a une longueur d'environ 5 cm à 50 cm, en particulier de 15 cm à 50 cm, et le coussin gonflable (16) présente une première extrémité libre (56) qui délimite la partie de retenue (52), pour lequel la première extrémité libre (56) est fixée avant l'activation par l'intermédiaire d'une bande de retenue (64) dans la zone du générateur de gaz (18), laquelle présente une zone de faiblesse (80), et que la bande de retenue (64) est intacte au moins jusqu'à ce que le col (54) soit complètement rempli de gaz.

2. Système de retenue des occupants d'un véhicule selon la revendication 1, **caractérisé en ce que** le col (54) est plié en un à trois plis en zigzag.

3. Système de retenue des occupants d'un véhicule selon l'une des revendications précédentes, **caractérisé en ce que**, lorsque le coussin gonflable (16) est déployé et gonflé, le col (54) est plus étroit que la partie de retenue (52), vu dans la direction transversale (Q_{F}) du véhicule.

4. Système de retenue des occupants d'un véhicule selon l'une des revendications précédentes, **caractérisé en ce que** la section de liaison (50) et le paquet principal (48) sont disposés et repliés ensemble dans le paquet de coussin gonflable (14) de telle sorte que le paquet principal (48) ne se déploie que lorsqu'il se trouve entièrement dans l'habitacle du véhicule.

5. Système de retenue des occupants d'un véhicule selon l'une quelconque des revendications précédentes, **caractérisé en ce que** la partie de retenue (52) est à la fois pliée et roulée dans le paquet principal (14).

6. Système de retenue des occupants d'un véhicule selon l'une des revendications précédentes, **caractérisé en ce que** le coussin gonflable (16) est un coussin gonflable pour le passager avant.
